# EUROPÄISCHE PATENTANMELDUNG

(11) **EP 2 448 092 A2**
(43) Veröffentlichungstag der Anmeldung: **02.05.2012**
(21) Anmeldenummer: 11182841.4
(22) Anmeldetag: 27.09.2011
(51) Int. Cl.: H02K 7/00, B60K 6/387, B60K 6/40, B60K 6/48

(54) **Antriebseinheit mit einer Elektromaschine und einer Kupplung**

(30) Priorität: 29.10.2010 DE 102010043117
(71) Anmelder: ZF Friedrichshafen AG, 88038 Friedrichshafen (DE)
(72) Erfinder: Ratte, Andreas, 97456 Dittelbrunn (DE); Markow, Alexander, 97424 Schweinfurt (DE)

(57) **Zusammenfassung**

Es wird eine Antriebseinheit (10) für ein Kraftfahrzeug beschrieben, welche eine Elektromaschine (12) mit einem Stator (20) und einen radial zu dem Stator (20) angeordneten und um eine Achse (A) drehbaren Rotor (26) umfasst, wobei innerhalb der Rotor-Stator-Anordnung ein zentraler Aufnahmeraum (32) ausgebildet ist, in dem eine Kupplung (14) mit einem Eingangs- und einem Ausgangselement (50; 56) angeordnet ist. Es wird zur Erzielung einer kompakten Bauweise vorgeschlagen, ein zur Betätigung der Kupplung (14) vorgesehenes Ausrückorgan (16) gemeinsam mit der Kupplung (14) in dem Aufnahmeraum (32) anzuordnen.

## Beschreibung

Die Erfindung betrifft eine Antriebseinheit für ein Kraftfahrzeug mit einer Elektromaschine und einer Kupplung gemäß dem Oberbegriff des Patentanspruchs 1.

Eine gattungsgemäße Antriebseinheit geht bereits aus der EP 1 150 007 B1 hervor. Dort ist die als Starter-Generator fungierende Elektromaschine mit einem innerhalb eines Stators angeordneten Rotor ausgebildet, welcher in einem Kurbelwellenfortsatz eines Verbrennungsmotors und der Eingangswelle eines Gangwechselgetriebes gelagert ist. Innerhalb eines Aufnahmeraums des Rotors ist axial zwischen einem Rotorträger und einem mit der Kurbelwelle verbundenem Schwungrad eine Reibungskupplung mit zwei drehfest am Schwungrad befindlichen Kupplungsscheiben vorgesehen, wobei die Kupplungsscheiben mit einer am Rotor axial verlagerbaren Anpressplattenkonfiguration in Reibwechselwirkung gebracht werden können. Das Ausrückorgan der Kupplung ist an dem Gangwechselgetriebe festgelegt und durchgreift mittels Betätigungsstößeln den Rotorträger.

Die Montage der erläuterten Antriebseinheit ist durch die starke Integration mit dem Verbrennungsmotor und dem Getriebe sehr aufwändig, wobei eine funktionierende Antriebseinheit erst nach dem erfolgten Zusammenbau der genannten Komponenten zur Verfügung steht und dann jedoch wegen einer geschlossenen Gehäuseanordnung nicht ohne weiteres zugänglich ist.

Von diesem Stand der Technik ausgehend, stellt sich die Erfindung die Aufgabe, eine bauraumsparende, universell verwendbare und leicht in einem Fahrzeugantriebsstrang montierbare Antriebseinheit zur Darstellung eines Hybridfahrzeuges zu schaffen.

Die Erfindung löst die vorstehend genannte Aufgabe bei einer Antriebseinheit der eingangs genannten Art mit den im Kennzeichen von Patentanspruch 1 aufgeführten Merkmalen.

Es wird eine Antriebseinheit vorgeschlagen, umfassend eine Elektromaschine mit einem Stator und mit einem radial zu dem Stator angeordneten und um eine Achse drehbaren Rotor, wobei innerhalb der Rotor-Stator-Anordnung ein zentraler Aufnahmeraum ausgebildet ist und wobei die Antriebsanordnung weiter eine in dem Aufnahmeraum angeordnete Kupplung mit einem Eingangs- und einem Ausgangselement und ein Ausrückorgan zur Betätigung der Kupplung umfasst.

Gemäß der Erfindung zeichnet sich die Antriebseinheit dadurch aus, dass das Ausrückorgan gemeinsam mit der Kupplung in dem Aufnahmeraum angeordnet ist. Dadurch kann ein erheblicher Bauraumgewinn erzielt werden, wodurch ein Fahrzeugantriebsstrang kürzer und somit kompakter dargestellt werden oder alternativ Bauraum für weitere Funktionselemente geschaffen werden kann. Vorzugsweise sind die Kupplung und deren Ausrückorgan im Wesentlichen innerhalb der axialen Erstreckung der Elektromaschine in dem Aufnahmeraum untergebracht. Die elektrische Maschine kann zur Realisierung der Erfindung als Innen- oder als Außenläufermaschine aufgebaut sein.

Die in den abhängigen Ansprüchen aufgeführten Merkmale geben vorteilhafte Weiterbildungen und Ausgestaltungen der Erfindung an.

Mit Vorteil ist der Rotor mittels eines ersten Rotorträgers mit einer an einem ersten Lagerträger der Antriebseinheit gelagerten Rotorwelle drehfest verbunden, wobei der Lagerträger insbesondere als ein sich radial erstreckendes Lagerschild ausgeführt ist. Das Lagerschild kann somit stirnseitig eine Außengehäusewand der Antriebseinheit ausbilden.

Mit weiterem Vorteil ist der erste Rotorträger so angeordnet, dass dieser den zentralen Aufnahmeraum axial unterteilt und wobei dieser Rotorträger zur Betätigung der Kupplung von einem Element der Kupplung oder von einem Element des Ausrückorgans, insbesondere axial durchgriffen wird.

Eine höhere Stabilität erfährt die Antriebseinheit durch einen zweiten Rotorträger, welcher von dem ersten Rotorträger axial beabstandet ist und wobei der zweite Rotorträger an einem weiteren, zweiten Lagerträger gelagert ist. Auf diese Weise kann ein fliehkraftbedingtes radiales Aufweiten des Rotors und eine ungewünschte Verringerung des zwischen Rotor und Stator ausgebildeten Luftspalts effektiv vermieden werden. Vorzugsweise ist zumindest einer der Rotorträger axial endseitig am Rotor festgelegt. Der Aufnahmeraum zur Anordnung der Kupplung und des Ausrückorgans kann sich somit axial zwischen dem ersten und dem zweiten Lagerträger erstrecken.

Zur Darstellung einer konstruktiv eigenständigen Antriebseinheit wird vorgeschlagen, dass sich das Ausrückorgan an einem der Lagerträger abstützen kann und dass noch weitergehend der entsprechende Lagerträger als Sitz für das Ausrückorgan ausgestaltet ist.

Mit weiterem Vorteil ist vorgesehen, den Stator an einem Statorträger bzw. an einer Statorträgeranordnung festzulegen, wobei zumindest einer der beiden Lagerträger gemeinsam mit dem Statorträger, das heißt mit diesem einteilig, ausgebildet ist oder an diesem als separates Bauteil festgelegt ist.

Zur Ermöglichung des alleinigen elektromotorischen Fahrbetriebs unter einer zumindest zeitweisen Stillsetzung eines Verbrennungsmotors ist günstigerweise die Eingangswelle der Antriebseinheit mit dem Eingangselement der Kupplung drehverbunden oder bildet diese selbst aus, wobei die Ausgangswelle durch die Rotorwelle oder durch ein mit der Rotorwelle verbundenes Element gebildet wird. Durch Öffnen der Kupplung kann somit ein über die Eingangswelle mit dessen Kurbelwelle gekoppelter Verbrennungsmotor von dem Antriebsstrang abgekoppelt werden.

Gemäß einer besonders vorteilhaften Ausgestaltung der Erfindung ist die Kupplung als Reibungskupplung, insbesondere als trockenlaufende Reibungskupplung mit mindestens einer Kupplungs- bzw. Reibscheibe, zur Übertragung hoher Anfahrdrehmomente vorzugsweise jedoch mit mehreren Kupplungs- bzw. Reibscheiben ausgeführt. Das Ausrückorgan ist vorzugsweise als konzentrischer, insbesondere um die Rotorwelle angeordneter Nehmerzylinder einer hydraulischen oder pneumatischen Ausrückeinrichtung ausgebildet. Mit noch weiterem Vorteil ist die Kupplung vom "normally-closed" Typ ausgeführt, wobei diese alternativ dazu auch vom "normally-open" Typ konzipiert sein kann.

Nachstehend wird die Erfindung beispielhaft anhand der beigefügten Figuren erläutert.

Es zeigen:
Fig. 1 eine Axialschnittdarstellung einer Antriebseinheit, welche eine Elektromaschine mit einem Aufnahmeraum aufweist, in dem eine Kupplung und ein KupplungsAusrückorgan angeordnet sind;
Fig. 2 eine vergrößerte Darstellung des Aufnahmeraums der Fig. 1 mit der darin angeordneten Kupplung und dem KupplungsAusrückorgan.

In den Figuren ist eine Antriebseinheit 10 für ein Hybridfahrzeug dargestellt, welche als hauptsächliche Komponenten eine Elektromaschine 12, eine Kupplung 14 und ein Ausrückorgan 16 zur Betätigung der Kupplung 14 umfasst. Die Antriebseinheit ist zum Einbau in einem hier zeichnerisch nicht dargestellten Fahrzeugantriebstrang, genauer zwischen einem Verbrennungsmotor und einem Gangwechselgetriebe vorgesehen und steht dazu einerseits mit der Kurbelwelle des Verbrennungsmotors und andererseits mit einem Drehmomentwandler oder unmittelbar mit der Eingangswelle des Gangwechselgetriebes in Wirkverbindung.

Die Elektromaschine 12 ist im vorliegenden Fall als permanenterregte Innenläufermaschine aufgebaut. Diese weist zunächst einen, an einer fluidkühlbaren Trägeranordnung 18 festgelegten Stator 20 auf, welcher ein Stator-Blechpaket 22 und eine an daran angeordnete Wicklung 24 umfasst. Innerhalb des Stators 20 ist unter Ausbildung eines radialen Luftspaltes ein um eine Achse A drehbarer Rotor 26 mit einem Rotor-Blechpaket 28 und mit Permanentmagneten 30 vorgesehen.

Der konkrete Aufbau des Magnetkreises und die Funktionsweise der Elektromaschine 12 sind für die weiteren Ausführungen ohne Bedeutung. In Bezug auf die Erfindung steht vielmehr die konstruktiv räumliche Anordnung der Komponenten im Vordergrund. In den Figuren ist erkennbar, dass innerhalb der Rotor-Stator-Anordnung, insbesondere innerhalb des Rotors 26 ein zentraler Aufnahmeraum 32 ausgebildet ist, in dem die Kupplung 14 gemeinsam mit dem Ausrückorgan 16 angeordnet sind und dabei die axiale Erstreckung der Elektromaschine 12 nicht übertreffen.

Die Kupplung 14 ist vorliegend als trockenlaufende Mehrscheibenkupplung vom "normally-closed"-Typ zur gedrückten Betätigung ausgebildet und kann von einem als konzentrischen hydraulischen Nehmerzylinder ausgebildetem Ausrückorgan 16 nach Maßgabe einer Steuerung oder eines Fahrzeugführers geöffnet und geschlossen werden. Die Antriebseinheit 10 kann ferner auch weitere Komponenten einer hydraulischen Kupplungsausrückeinrichtung, wie einen mit dem Nehmerzylinder 16 in Fluidverbindung stehenden Geberzylinder, einen Fluidvorratsbehälter und eine den Geberzylinder ansteuernde Aktorik umfassen.

Zurückkommend auf die Elektromaschine 12 wird der Rotor 26 mittels einer Trägeranordnung 34, 36 konzentrisch zum Stator 20 gehalten, welche einen ersten Rotorträger 34 und einen zweiten Rotorträger 36 umfasst. Der erste Rotorträger 34 ist axial endseitig am Rotor 26 und zwar an einem axialen Tragbereich 36a des zweiten Rotorträgers 36 festgelegt. Auf der Außenumfangsfläche des axialen Tragbereichs 36a ist das Rotorblechpaket 28 mit den Permanentmagneten 30 fixiert. Der erste Rotorträger 34 erstreckt sich mittels eines etwa zylinderförmigen Abschnitts 34a von dessen Verbindungsbereich mit dem zweiten Rotorträger 36 innerhalb des Rotors 26 etwa bis zur axialen Mitte des Aufnahmeraums 32, um dort einen nach radial innen gerichteten, scheibenförmigen Boden bzw. einen radialen Tragbereich 34b auszubilden, der mit einem Flansch 38a einer Rotorwelle 38 drehfest verbunden und hier insbesondere verschweißt ist. Diese Rotorwelle 38 ist mittels eines hier zweireihig ausgeführten Wälzlagers 40 an einem als Lagerschild ausgebildeten ersten Lagerträger 42 gelagert. Dieser Lagerträger 42 ist einteilig mit einem Tragelement 18a der Statorträgeranordnung 18 als Gussteil ausgebildet, welches gleichzeitig als ein Gehäuseelement der Antriebseinheit 10 dient. Zur axial gesicherten Aufnahme des Wälzlagers 40 ist an dem Lagerträger 42 ein axial in den Aufnahmeraum 32 weisender Rohrabschnitt 42a mit einem Anschlag ausgebildet, wobei das Wälzlager 40 auf die Innenumfangsfläche des Rohrabschnitts 42a aufgeschoben ist. Die Rotorwelle 38 stellt gleichzeitig bezogen auf die Anordnung zwischen einem Verbrennungsmotor und einem Getriebe die Ausgangswelle der Antriebseinheit 10 dar, die vorliegend zu Übertragung eines Drehmoments mit einem scheibenförmigen, sich nach radial außen erstreckenden Übertragungselement 44 drehfest verbunden, insbesondere verschraubt ist.

Der zweite Rotorträger 36 weist neben dem bereits angesprochenen axialen Tragbereich 36a einen sich an diesen anschließenden und stirnseitig bezüglich des ersten Rotorträgers 34 gegenüberliegend angeordneten radialen Tragbereich 36b auf, welcher von dem ersten Rotorträger 34, insbesondere von dessen Boden 34b axial beabstandet ist.

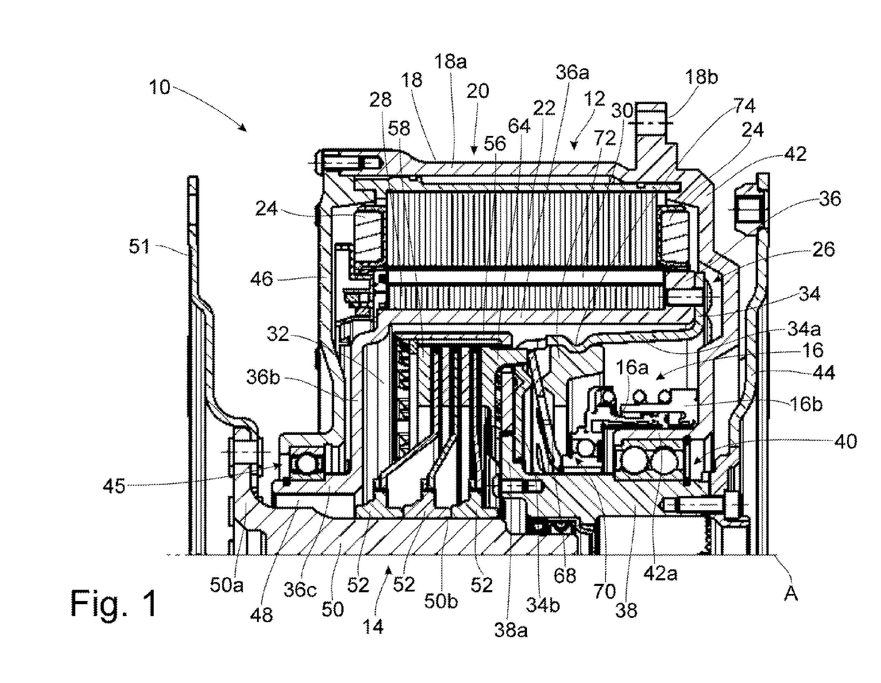

Wie in Fig. 1 erkennbar, ist der zweite Rotorträger 36 mittels eines an dem radialen Tragbereich 36b ausgebildeten Rohrabschnittes 36c und einem Wälzlager 45 an einem zweiten Lagerträger 46 gelagert. Dieser zweite Lagerträger 46 ist ebenfalls als ein sich radial von der Außenseite der Antriebseinheit 10 erstreckendes Lagerschild ausgeführt, welches mit dem Tragelement 18a der Statorträgeranordnung 18 mittels Schraubbolzen verbunden ist und das gleichfalls als ein Gehäuseelement der Antriebseinheit 10 dient. Der Aufnahmeraum 32 erstreckt sich somit axial zwischen dem ersten 42 und dem zweiten Lagerträger 46.

Der zweite Rotorträger 36 bildet in dessen Lagerbereich eine zentrale Innenausnehmung 48 aus, durch welche eine Eingangswelle 50 der Antriebseinheit 10 in diese eingeführt ist und sich dort axial hinein erstreckt. An der Eingangswelle 50 ist ein Radialflansch 50a vorgesehen, der mit einem Mitnehmer- bzw. Koppelelement 51, insbesondere einer Driveplate oder einer Flexplate verbunden ist. Alternativ kann die Eingangswelle 50 auch mit einem Torsionsdämpfer, beispielsweise einem Zweimassenschwungrad verbunden sein.

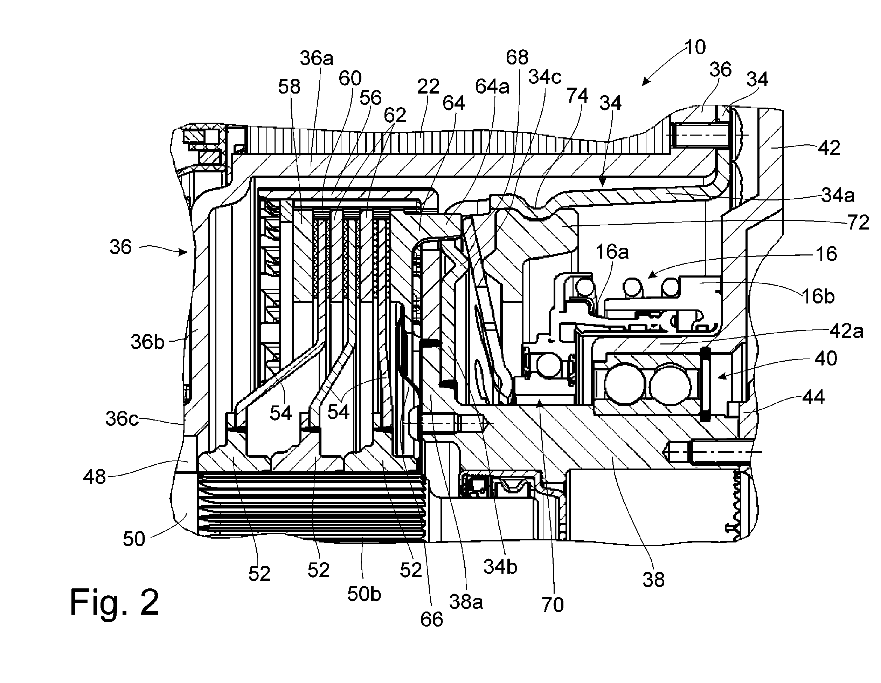

Die Eingangswelle 50 ist zumindest in dem innerhalb der Antriebseinheit 10 liegendem Abschnitt mit einer Verzahnung 50b zur Aufnahme der Nabenbereiche 52 von drei mit Reibbelägen versehenen Kupplungs- bzw. Reibscheiben 54 ausgeführt. Diese Kupplungsscheiben 54 sind zwischen einer axial an einem topfförmigen Kupplungsgehäuse 56 festgelegten Druckplatte 58, zwei an dem Kupplungsgehäuse 56 mittels einer Verzahnung 60 axial verlagerbaren Zwischenplatten 62 und einer ebenfalls axial zu dem Kupplungsgehäuse 56 verlagerbaren Anpressplatte 64 angeordnet und können mit diesen Platten 58, 62, 64 in Reibwechselwirkung treten. Die Anpressplatte 64 wird dabei zusätzlich durch am Kupplungsgehäuse 56 oder, wie besonders gut in Fig. 2 erkennbar, an der Rotorwelle 38 eingebrachte Federelemente 66 axial in Richtung der geöffneten Stellung der Kupplung 14 belastet. Zur Erzielung einer axial kompakten Bauweise sind die Kupplungsscheiben 54 von deren Naben 52 ausgehend nach außen gekröpft ausgebildet, so dass deren gegenseitiger Abstand im Reibbereich kleiner ist als im Nabenbereich.

Bei der wie vorstehend beschrieben ausgeführten Kupplung 14 fungiert somit das Eingangselement der Kupplung 14 als Eingangswelle 50 der Antriebseinheit 10, während das Kupplungsgehäuse 56 fest mit dem Radialflansch 38a der Rotorwelle 38 verbunden, insbesondere verschweißt ist und das Ausgangselement der Kupplung 14 darstellt.

Zur Betätigung der Kupplung 14 mittels des Ausrückorgans 16 weist die Anpressplatte 64 in deren radial äußeren Bereich mehrere am Umfang verteilte und sich in axialer Richtung durch Ausnehmungen des ersten Rotorträgers axial hindurch erstreckende Fortsätze 64a auf, an die ein Betätigungselement, insbesondere ein Hebelelement 68, beispielsweise eine Membranfeder mit deren radial äußeren Bereich angreifen kann. Der radial innere oder im Falle von Membranfederzungen die radial inneren Bereiche des Hebelelementes 68 befinden sich in Anlage an einem Ausrücklager 70, das an einem axial verlagerbaren Kolben 16a des Ausrückorgans 16 bzw. des Nehmerzylinders angeordnet ist. Ein gegenüber dem Kolben 16a axial feststehendes Zylindergehäuse 16b wird von der Außenumfangsfläche des Rohrabschnittes 42a aufgenommen und stützt sich an dort an dem ersten Lagerträger 42 ab. Zur Erzeugung einer Hebelübersetzung ist das Hebelelement 68 auf einer Seite an einer ringförmigen, axial ausgerichteten Schneidauflage 34c des Rotorträgers 34 gelagert. An der gegenüberliegenden Seite greift als Gegenlagerstelle eine Schneide eines Schneidlagerringes 72 an, wobei er Schneidlagerring 72 selbst axial an dem ersten Lagerträger 34 durch eine Formschlussverbindung, insbesondere durch eine Verrollung 74 gegenüber den wirkenden Ausrückkräften festgelegt ist. Alternativ zu der erläuterten Ausführung kann der Rotorträger 34 auch anstelle von der Anpressplatte 64 auch von einem Element des Ausrückorgans 16 durchgriffen werden.

Zur Montage der Antriebseinheit 10 kann beispielsweise zunächst die Kupplung 14 mit deren Ausrückorgan 16 unter Einbeziehung des ersten Lagerträgers 42 und der Rotorwelle 38 als eine Baueinheit aufgebaut werden. Diese Baueinheit wird in einem weiteren Schritt in den Aufnahmeraum 32 des Rotors 26 eingebracht und mittels des ersten Rotorträgers 34 an dem Rotor 26 festgelegt. Nunmehr kann die jetzt vorliegende Baueinheit von der offenen Gehäuseseite der Antriebseinheit 10 in den Innenraum des Stators 20 eingeführt werden, wobei die Rotorwelle 38 durch das Wälzlager 40 aufgenommen und zentriert wird. Weiter wird das zweite Lagerschild 46 mit dem Gehäuse verbunden, wobei das dort angeordnete Wälzlager 45 den Rohrabschnitt 36c des zweiten Rotorträgers 36 führt und zentriert. Schließlich wird die Eingangswelle 50 in die Antriebseinheit 10 eingeführt und dabei von den Naben 52 der Kupplungsscheiben 54 aufgenommen.

Alternativ können die Kupplung 14 und deren Ausrückorgan 16 auch voneinander getrennt innerhalb des Rotors 26 festgelegt werden. In diesem Fall wird zunächst innerhalb des Stators 20 das Ausrückorgan 16 und das dort zugeordnete Lager 40 auf dem Lagerträger 42 montiert. Die mit dem ersten Lagerträger 34 und der Rotorwelle 38 verbundene Kupplung 14 einschließlich des Betätigungselementes 68 und des Schneidlagerringes 72 werden im Rotor 26 vormontiert und mit diesem gemeinsam bei der weiteren Montage in den Stator 20 eingeschoben, wobei die Rotorwelle 38 von dem Lager 40 aufgenommen wird und das Betätigungselement 68 in Anlage zu dem Ausrückorgan 16 kommt.

Bei der Integration der Antriebseinheit 10 in einem Kraftfahrzeugantriebsstrang werden die Eingangs- 50 und die Ausgangswelle 38 in der eingangs der Figurenbeschreibung erläuterten Art und Weise mit den angrenzenden Funktionseinheiten in eine Drehmitnahmeverbindung gebracht, wobei die Antriebseinheit 10 durch einen an dem Tragelement 18a vorgesehenen Verbindungsbereich 18b mit einem Getriebegehäuse und einem Zwischengehäuse oder einem Verbrennungsmotorgehäuse verbunden wird und über diese Verbindung ein Reaktionsdrehmoment und ein Tragmoment aufbringen kann.

### Bezugszeichenliste

- 10: Antriebseinheit
- 12: Elektromaschine
- 14: Kupplung
- 16: Ausrückorgan
- 1 6a: Kolben
- 16b: Zylindergehäuse
- 18: Stator-Trägeranordnung
- 18a: Tragelement
- 18b: Verbindungsbereich
- 20: Stator
- 22: Stator-Blechpaket
- 24: Wicklung
- 26: Rotor
- 28: Rotor-Blechpaket
- 30: Permanentmagnet
- 32: Aufnahmeraum
- 34: Rotorträger
- 34a: zylinderförmiger Abschnitt
- 34b: radialer Tragbereich
- 34c: Schneidauflage
- 36: Rotorträger
- 36a: axialer Tragbereich
- 36b: radialer Tragbereich
- 36c: Rohrabschnitt
- 38: Rotorwelle
- 38a: Flansch
- 40: Wälzlager
- 42: Lagerträger
- 42a: Rohrabschnitt
- 44: Übertragungselement
- 45: Wälzlager
- 46: Lagerträger
- 48: Innenausnehmung
- 50: Eingangswelle
- 50a: Radialflansch
- 50b: Verzahnung
- 51: Koppelelement
- 52: Nabenbereich
- 54: Kupplungs- bzw. Reibscheibe
- 56: Kupplungsgehäuse
- 58: Druckplatte
- 60: Verzahnung
- 62: Zwischenplatte
- 64: Anpressplatte
- 64a: Fortsatz
- 66: Federelement
- 68: Hebelement
- 70: Ausrücklager
- 72: Schneidlagerring
- 74: Verrollung
- A: Drehachse

## Patentansprüche

1. Antriebseinheit (10), umfassend
― eine Elektromaschine (12) mit einem Stator (20) und mit einem radial zu dem Stator (20) angeordneten und um eine Achse (A) drehbaren Rotor (26), wobei innerhalb der Rotor-Stator-Anordnung ein zentraler Aufnahmeraum (32) ausgebildet ist,
― eine in dem Aufnahmeraum (32) angeordnete Kupplung (14) mit einem Eingangs- (50) und einem Ausgangselement (56),
― ein Ausrückorgan (16) zur Betätigung der Kupplung (14),
**dadurch gekennzeichnet,**
**dass** das Ausrückorgan (16) gemeinsam mit der Kupplung (14) in dem Aufnahmeraum (32) angeordnet ist.

2. Antriebseinheit nach Anspruch 1,
**dadurch gekennzeichnet, dass** der Rotor (26) mittels eines ersten Rotorträgers (34) mit einer an einem ersten Lagerträger (42) der Antriebseinheit gelagerten Rotorwelle (38) drehfest verbunden ist.

3. Antriebseinheit nach Anspruch 2,
**dadurch gekennzeichnet, dass** der erste Rotorträger (34) zur Betätigung der Kupplung (14) von einem Element (64) der Kupplung (14) oder von einem Element des Ausrückorgans (16) durchgriffen wird.

4. Antriebseinheit nach Anspruch 2 oder 3,
**dadurch gekennzeichnet, dass** der Rotor (26) einen zweiten Rotorträger (36) aufweist, welcher von dem ersten Rotorträger (34) axial beabstandet ist, wobei der zweite Rotorträger (36) an einem zweiten Lagerträger (46) der Antriebseinheit (10) gelagert ist.

5. Antriebseinheit nach einem der Ansprüche 2-4,
**dadurch gekennzeichnet, dass** sich das Ausrückorgan (16) an einem Lagerträger (42) abstützt.

6. Antriebseinheit nach Anspruch 4 oder 5,
**dadurch gekennzeichnet, dass** sich der Aufnahmeraum (32) axial zwischen dem ersten (42) und dem zweiten Lagerträger (46) erstreckt.

7. Antriebseinheit nach einem der Ansprüche 2-6,
**dadurch gekennzeichnet, dass** der Stator (20) eine Statorträgeranordnung (18) aufweist und dass zumindest einer der Lagerträger (42; 46) gemeinsam mit der Statorträgeranordnung (18) ausgebildet oder an dieser festgelegt ist.

8. Antriebseinheit nach einem der Ansprüche 1-7,
**dadurch gekennzeichnet, dass** die Antriebseinheit (10) eine Eingangswelle (50) und eine Ausgangswelle (38) aufweist, wobei die Eingangswelle (50) mit dem Eingangselement der Kupplung (14) drehverbunden ist oder dieses ausbildet und wobei die Ausgangswelle (38) durch die Rotorwelle oder durch ein mit der Rotorwelle verbundenes Element gebildet wird.

9. Antriebseinheit nach einem der Ansprüche 1-8,
**dadurch gekennzeichnet, dass** die Kupplung (14) als trockenlaufende Reibungskupplung ausgeführt ist.

10. Antriebseinheit nach einem der Ansprüche 1-9,
**dadurch gekennzeichnet, dass** die Kupplung (14) vom "normally-closed" Typ ausgeführt ist.

11. Antriebseinheit nach einem der Ansprüche 1-10,
**dadurch gekennzeichnet, dass** das Ausrückorgan (16) als konzentrischer Nehmerzylinder einer hydraulischen oder pneumatischen Ausrückeinrichtung ausgeführt ist.
